(19) Europäisches Patentamt / European Patent Office / Office européen des brevets

(11) EP 4 686 927 A1

(12) EUROPEAN PATENT APPLICATION

(43) Date of publication:
**04.02.2026 Bulletin 2026/06**

(21) Application number: **25181505.6**

(22) Date of filing: **06.06.2025**

(51) International Patent Classification (IPC):
***G01L 1/22*** *(2006.01)* ***B23Q 17/00*** *(2006.01)*
***B23Q 17/09*** *(2006.01)* ***G01L 5/00*** *(2006.01)*
***G01L 5/1627*** *(2020.01)* ***G01L 1/04*** *(2006.01)*
***G01L 5/16*** *(2020.01)*

(52) Cooperative Patent Classification (CPC):
**G01L 5/0066; B23Q 17/005; B23Q 17/0966; G01L 5/0071; G01L 5/0076; G01L 5/008; G01L 5/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.07.2024 TW 113128290**

(71) Applicant: **Machsync Co., Ltd.**
**Taichung City, 428 (TW)**

(72) Inventor: **CHEN, JUI-TENG**
**404 Taichung City (TW)**

(74) Representative: **Cabinet Chaillot**
**16/20, avenue de l'Agent Sarre**
**B.P. 74**
**92703 Colombes Cedex (FR)**

# (54) METHOD FOR DISPLAYING FORCE OF TOOL HOLDER

(57) A method for displaying a force of a tool holder (1) is performed in a monitoring system. The monitoring system includes a processing device (10) and a display screen (20). The processing device (10) is wirelessly connected to a force-measuring device (2) of a tool holder (1) for signal communication. The force-measuring device (2) detects a force of the tool holder (1) and generates an original force data. The processing device (10) drafts and forms a force distribution diagram (31) in a coordinate diagram (30) according to the original force data. In this way, the user could immediately monitor an operation status of the tool holder (1) through the force distribution diagram (31) of the method for displaying the force of the tool holder (1).

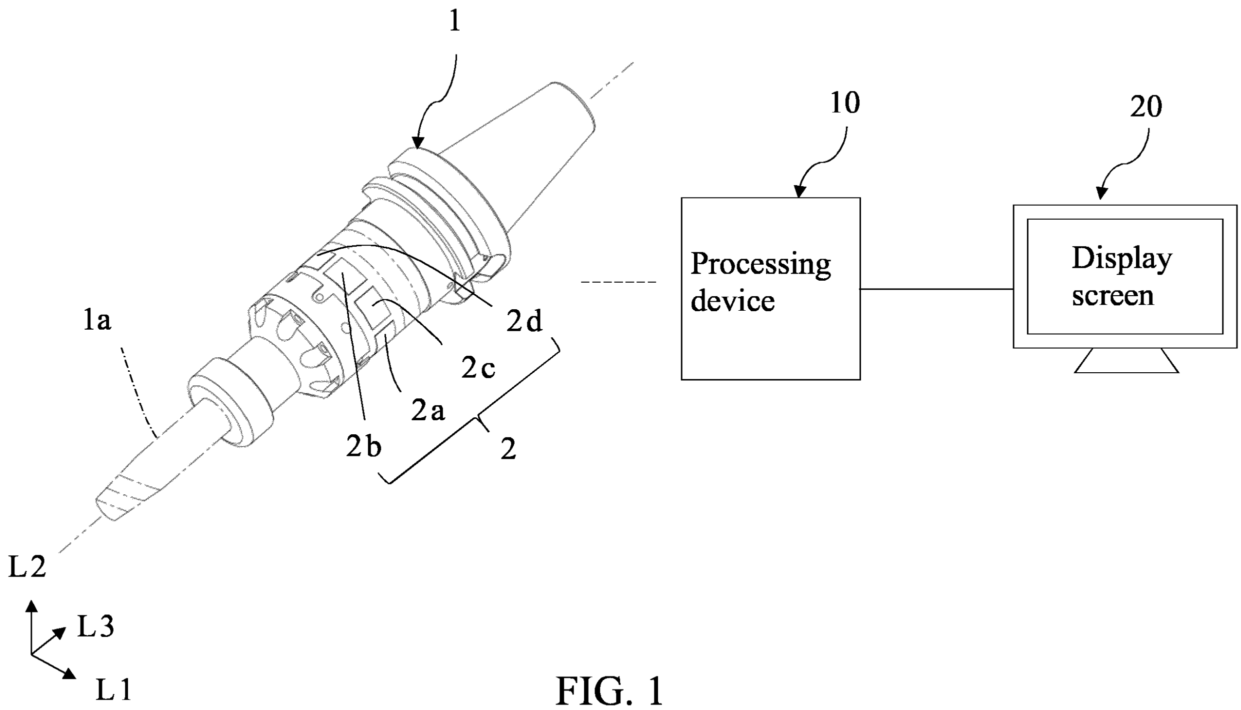


FIG. 1



Processed by Luminess, 75001 PARIS (FR)

## Description

## BACKGROUND OF THE INVENTION

### Technical Field

The present invention relates generally to a detection device, and more particularly a method for displaying a force of a tool holder.

### Description of Related Art

When a machine tool performs a machining process, an operation status of a tool is continuously monitored to ensure that a workpiece being machined meets design specifications and problems such as a decrease of machining precision caused by tool wear could be prevented.

For example, the US invention patent publication No. US8113066B2 discloses a chuck integrated force-measuring system, wherein at least one strain sensor is mounted on a rotating spindle of a machine tool to measure an instantaneous force of a cutting-tool tip, and a magnitude and a direction of the instantaneous force are determined by strain sensing.

However, the chuck integrated force-measuring system could only measure a force of which the cutting tool is in contact with a workpiece without presenting the results as data or diagrams Therefore, the conventional way of displaying the force measurements in the chuck integrated force-measuring system still has room for improvement.

## BRIEF SUMMARY OF THE INVENTION

In view of the above, the primary objective of the present invention is to provide a method for displaying a force of a tool holder, so that a user could immediately monitor an operation status of a tool holder.

The present invention provides a method for displaying a force of a tool holder performed in a monitoring system. The monitoring system includes a processing device and a display screen. The processing device is wirelessly connected to a force-measuring device of a tool holder for signal communication. The force-measuring device detects a force of the tool holder and generates an original force data. The method for displaying the force of the tool holder includes: receiving, by the processing device, the original force data and converting, by the processing device, the original force data to a force data; obtaining, by the processing device, a plurality of data elements from the force data, wherein each of the data elements of the force data includes a first bending value and a second bending value, the first bending value corresponds to a bending exerted on the tool holder along a first axial direction, the second bending value corresponds to a bending exerted on the tool holder along a second axial direction, and the first axial direction is perpendicular to the second axial direction; extracting, by the processing device, a predetermined number of data elements from the data elements of the force data to form a data element batch; establishing, by the processing device, a coordinate diagram on a display interface of the display screen, wherein the coordinate diagram includes an X-axis and a Y-axis; and generating, by the processing device, a X-coordinate of the X-axis according to the first bending value of each of the data elements of the data element batch, generating, by the processing device, a Y-coordinate according to the second bending value of each of the data elements of the data element batch, drafting, by the processing device, a data point corresponding to one of the data elements of the data element batch in the coordinate diagram according to the X-coordinate and the Y-coordinate generated, and drafting, by the processing device, a plurality of data points respectively corresponding to the data elements of the data element batch to form a force distribution diagram in the coordinate diagram.

With the aforementioned design, the cutting point of the tool holder acting on the workpiece has a large amount of important information. The present invention could immediately measure the force of the tool holder experienced during machining. By analyzing the force of the tool holder experienced during machining, the accuracy of the workpiece could be improved and the condition of the tool holder could be predicted, thereby ensuring the stability of the production efficiency.

## BRIEF DESCRIPTION OF THE SEVERAL VIEWS OF THE DRAWINGS

The present invention will be best understood by referring to the following detailed description of some illustrative embodiments in conjunction with the accompanying drawings, in which

FIG. 1 is a schematic view of the monitoring system for performing the method for displaying the force of the tool holder according to an embodiment of the present invention;

FIG. 2 is a block diagram of the tool holder for the method for displaying the force of the tool holder according to the embodiment of the present invention;

FIG. 3 is a flowchart showing Step S11 to Step S15 of the method for displaying the force of the tool holder according to the embodiment of the present invention;

FIG. 4 is a flowchart showing Step S21 to Step S23 of the method for displaying the force of the tool holder according to the embodiment of the present invention;

FIG. 5 is a schematic view of the display interface of the display screen of the method for displaying the force of the tool holder according to the embodiment of the present invention;

FIG. 6 is a flowchart showing Step S16 to Step 18 of the method for displaying the force of the tool holder according to the embodiment of the present invention;

FIG. 7 is another schematic view of the display interface of the display screen of the method for displaying the force of the tool holder according to the embodiment of the present invention;

FIG. 8 is a flowchart showing Step S31 to S33 of the method for displaying the force of the tool holder according to the embodiment of the present invention;

FIG. 9 is a schematic view showing that the coordinate diagram of the method for displaying the force of the tool holder according to the embodiment of the present invention is divided into four quadrants;

FIG. 10 is a schematic view showing the blade color-displaying process of the method for displaying the force of the tool holder according to the embodiment of the present invention;

FIG. 11 is a flowchart showing Step S321 to Step S324 of the method for displaying the force of the tool holder according to the embodiment of the present invention;

FIG. 12 is a schematic view showing the distribution of the blade angles of the method for displaying the force of the tool holder according to the embodiment of the present invention; and

FIG. 13 is a schematic view showing that the angle ranges of the method for displaying the force of the tool holder according to the embodiment of the present invention are calculated.

## DETAILED DESCRIPTION OF THE INVENTION

A method for displaying a force of a tool holder is illustrated in FIG. 1 to FIG. 5 and is performed in a monitoring system. The monitoring system includes a processing device 10 and a display screen 20. The processing device 10 is wirelessly connected to a force-measuring device 2 of a tool holder 1 for signal communication. The tool holder 1 is configured to connect to a tool 1a. The tool 1a has a plurality of blades. The force-measuring device 2 is configured to detect a force status of the tool holder 1 and output at least one detection signal. In the current embodiment, the tool holder 1 is a rotating tool holder, but not limited thereto; the processing device 10 is a computer, but not limited thereto.

In the current embodiment, the at least one detection signal includes a plurality of detection signals; the detection signals include a first detection signal $V_{S1}$, a second detection signal $V_{S2}$, a third detection signal $V_{S3}$, and a fourth detection signal $V_{S4}$. The force-measuring device 2 includes a plurality of force detection unit. The force detection units include a first bending detection unit 2a, a second bending detection unit 2b, a torsion detection unit 2c, and a tension detection unit 2d.

Referring to FIG. 1, the first bending detection unit 2a is configured to detect a force exerted on the tool holder 1 along a first axial direction L1 to correspondingly output the first detection signal $V_{S1}$. When a stress exerted on the tool holder 1 along the first axial direction L1 increases, an absolute value of the first detection signal $V_{S1}$ correspondingly increases.

The second bending detection unit 2b is configured to detect a force exerted on the tool holder 1 along a second axial direction L2 to correspondingly output the second detection signal $V_{S2}$. The second axial direction L2 is perpendicular to the first axial direction L1. When a stress exerted on the tool holder 1 along the second axial direction L2 increases, an absolute value of the second detection signal $V_{S2}$ correspondingly increases.

The torsion detection unit 2c is configured to detect a torque exerted on the tool holder 1 around a third axial direction L3 to correspondingly output the third detection signal $V_{S3}$. The third axial direction L3 is perpendicular to the first axial direction L1 and the second axial direction L2. When the torque exerted on the tool holder 1 increases, an absolute value of the third detection signal $V_{S3}$ correspondingly increases.

The tension detection unit 2d is configured to detect a tension of the tool holder 1 along the third axial direction L3 to correspondingly output the fourth detection signal $V_{S4}$. When the tension exerted on the tool holder 1 along the third axial direction L3 increases, an absolute value of the fourth detection signal $V_{S4}$ correspondingly increases.

Referring to FIG. 2, a circuit board 3 is disposed in the tool holder 1. The circuit board 3 includes a control module 4, a temperature detection module 5, and a wireless transmission module 6. The control module 4 includes an analog/digital signal converter 4a and a controller 4b. The controller 4b could be, for example, a microcontroller. The controller 4b is electrically connected to the analog/digital signal converter 4a. The analog/digital signal converter 4a is electrically connected to the first bending detection unit 2a, the second bending detection unit 2b, the torsion detection unit 2c, and the tension detection unit 2d. The controller 4b obtains the first detection signal $V_{S1}$, the second detection signal $V_{S2}$, the third detection signal $V_{S3}$, and the fourth detection signal $V_{S4}$ through the analog/digital signal converter 4a.

The temperature detection module 5 is electrically connected to the controller 4b. The temperature detection module 5 is configured to detect a temperature change of the tool holder 1 to correspondingly output a temperature detection signal $V_{S5}$.

The wireless transmission module 6 is electrically connected to the controller 4b. The force-measuring device 2 further includes an antenna 7. The antenna 7 is electrically connected to the wireless transmission module 6. In the current embodiment, the antenna 7 is made of a flexible printed circuit board. In this way, the controller 4b transmits the first detection signal $V_{S1}$, the second detection signal $V_{S2}$, the third detection signal $V_{S3}$, the fourth detection signal $V_{S4}$, and the temperature detection signal $V_{S5}$ to the processing device 10 through the wireless transmission module 6 and the antenna 7. Therefore, a user could immediately receive the first detection signal $V_{S1}$, the second detection signal $V_{S2}$, the third detection signal $V_{S3}$, the fourth detection signal $V_{S4}$, and the temperature detection signal $V_{S5}$ through the processing device 10 and generate an original force data through the processing device 10 to effectively monitor and analyze a working status of a cutting process.

With the aforementioned structure, the method for displaying the force of the tool holder in the current embodiment could be performed. Referring to FIG. 3 to FIG. 5, the method for displaying the force of the tool holder includes Steps S11 to S15.

Step S11: the processing device 10 receives the original force data and converts the original force data to a force data. The original force data includes a plurality of original data groups, a plurality of original torsion values, and a plurality of original tension values. Each of the original data groups includes a first original bending value and a second original bending value. The first original bending value is converted from the first detection signal $V_{S1}$ outputted by the first bending detection unit 2a. The second original bending value is converted from the second detection signal $V_{S2}$ outputted by the first bending detection unit 2a. Each of the original torsion values is converted from the third detection signal $V_{S3}$ outputted by the torsion detection unit 2c. Each of the original tension values is converted from the fourth detection signal $V_{S4}$ outputted by the tension detection unit 2d.

After the processing device 10 receives the original data groups, the original torsion values, and the original tension values of the original force data, the processing device 10 performs a calibration process on the first original bending value, the second original bending value, each of the original torsion values, and each of the original tension values. The calibration process is explained below.

After the processing device 10 receives the original force data, the processing device 10 performs a conversion process on each of the original data groups to obtain the force data. The force data includes a plurality of converted data groups. Each of the converted data groups includes a first calibrated bending value, a second calibrated bending value, a calibrated torsion value, and a calibrated tension value. The conversion process includes reducing the first original bending value of each of the original data groups by a first standard bending value to correspondingly obtain the first calibrated bending value, reducing the second original bending value of each of the original data groups by a second standard bending value to correspondingly obtain the second calibrated bending value, reducing the original torsion value of each of the original data groups by a standard torsion value to correspondingly obtain the calibrated torsion value, and reducing the original tension value of each of the original data groups by a standard tension value to correspondingly obtain the calibrated tension value. The first standard bending value, the second standard bending value, the standard torsion value, and the standard tension value are calculated as shown below.

The first standard bending value is obtained as follows. When the tool 1a is not subjected to a force, the processing device 10 extracts a plurality of first original bending values from the original force data based on a first predetermined time during the conversion process and calculates an average of the first original bending values to form the first standard bending value.

The second standard bending value is obtained as follows. When the tool 1a is not subjected to a force, the processing device 10 extracts a plurality of second original bending values from the original force data based on a second predetermined time during the conversion process and calculates an average of the second original bending values to form the second standard bending value.

The standard torsion value is obtained as follows. When the tool 1a is not subjected to a force, the processing device 10 extracts a plurality of original torsion value from the original force data based on a third predetermined time during the conversion process and calculates an average of the original torsion values to form the standard torsion value.

The standard tension value is obtained as follows. When the tool 1a is not subjected to a force, the processing device 10 extracts a plurality of original tension values from the original force data based on a fourth predetermined time during the conversion process and calculates an average of the original tension values to form the standard tension value.

The first predetermined time, the second predetermined time, the third predetermined time, and the fourth predetermined time are identical to be a predetermined time. The predetermined time could be 1 second, but not limited thereto. The predetermined time could be greater than 0 second and could be less than or equal to 1.5 seconds.

By calibrating the original force data, errors occurred during a measuring process of the first bending detection unit 2a, the second bending detection unit 2b, the torsion detection unit 2c, and the tension detection unit 2d could be reduced, and calibrated values could more accurately reflect the actual force condition of the tool holder 1, thereby improving the precision of the measurement and the data.

Moreover, in the current embodiment, in order to facilitate a user to observe a change of the force of the tool holder 1, a compensation coefficient could be included to obtain the first calibrated bending value, the second calibrated bending value, the calibrated torsion value, and the calibrated tension value. More specifically, the conversion process is as follows: reducing the first original bending value by the first standard bending value and then multiplying by a first compensation coefficient to obtain the first calibrated bending value.

The conversion process is as follows: reducing the second original bending value by the second standard bending value and then multiplying by a second compensation coefficient to obtain the second calibrated bending value.

The conversion process is as follows: reducing the original torsion value by the standard torsion value and then multiplying by a torsion compensation coefficient to obtain the calibrated torsion value.

The conversion process is as follows: reducing the original tension value by the standard tension value and then multiplying by a tension compensation coefficient to obtain the calibrated tension value.

In the current embodiment, the first compensation coefficient, the second compensation coefficient, the torsion compensation coefficient, and the tension compensation coefficient could be adjusted to be different values. In other embodiments, the first compensation coefficient, the second compensation coefficient, the torsion compensation coefficient, and the tension compensation coefficient could be adjusted to be partly identical. For example, the first compensation coefficient and the second compensation coefficient could be 1.5, while the torsion compensation coefficient and the tension compensation coefficient could be 2.

By multiplying the aforementioned compensation coefficients, the first calibrated bending value, the second calibrated bending value, the calibrated torsion value, and the calibrated tension value could be compensated. In this way, different compensation coefficients could be applied in correspondence to different tool holders 1 in different specifications to compensate different tool holders 1 in different specifications, so that values displayed could be close to the actual force of the tool holder 1, thereby improving the readability of the data and the accuracy of the analysis.

Step S12: the processing device 10 obtains a plurality of data elements from the force data, wherein each of the data elements includes a first bending value, a second bending value, a torsion value, and a tension value. The first bending value is the first calibrated bending value of each of the converted data groups. The second bending value is the second calibrated bending value of each of the converted data groups. The torsion value is the calibrated torsion value of each of the converted data groups. The tension value is the calibrated tension value of each of the converted data groups. The first bending value corresponds to a bending exerted on the tool holder 1 along the first axial direction L1. The second bending value corresponds to a bending exerted on the tool holder 1 along the second axial direction L2. The torsion value corresponds to the torsion exerted on the tool holder 1 around the third axial direction L3. The tension value corresponds to the tension exerted on the tool holder 1 along the third axial direction L3.

Step S13: the processing device 10 extracts a predetermined number of data elements from the data elements of the force data to form a data element batch. In the current embodiment, the predetermined number is 1000 as an example; the processing device 10 extracts 1000 data elements from the data elements of the force data to form the data element batch, but not limited thereto; the user could determine the predetermined number of data elements in the data element batch to meet different requirements. Moreover, each of the data elements of the force data obtained by the processing device 10 has an index value. The index values of the data elements of the force data increase sequentially. The processing device 10 extracts the predetermined number of data elements according to the index values of the data elements of the data force to form the data element batch. In other words, the processing device 10 progressively numbers 1000 data elements starting from 1, that is the data elements with the index values from 1 to 1000 are a first data element batch, the data elements with the index values from 1001 to 2000 are a second data element batch, the data elements with the index values from 2001 to 3000 are a third data element batch, and so on and so forth.

Step S14: the processing device 10 establishes a coordinate diagram 30 on a display interface 21 of the display screen 20, wherein the coordinate diagram 30 includes an X-axis and a Y-axis. As the first bending value, the second bending value, the torsion value, and the tension value are calibrated values, an origin (0,0) of the coordinate diagram 30 is an intersection of the X-axis and the Y-axis.

Step S15: the processing device 10 generates a X-coordinate of the X-axis according to the first bending value of each of the data elements of the data element batch, generates a Y-coordinate of the Y-axis according to the second bending value of each of the data elements of the data element batch, drafts a data point corresponding to one of the data elements of the data element batch in the coordinate diagram 30 according to the X-coordinate and the Y-coordinate generated, and drafts a plurality of data points respectively corresponding to the data elements of the data element batch to form a force distribution diagram 31 in the coordinate diagram 30. In other words, the processing device 10 forms one of the data points by drafting one of the data points in the coordinate diagram 30 according to the X-coordinate (one of the first bending values) and the Y-coordinate (one of the second bending values) of the data element with the index value of 1 (one of the data elements) of the first data element batch; then, the processing device 10 forms another one of the data points by drafting another one of the data points in the coordinate diagram 30 according to the X-coordinate (another one of the first bending values) and the Y-coordinate (another one of the second bending values) of the data element with the index value of 2 (another one of the data elements) of the first data element batch; the processing device 10 continues drafting until the data point corresponding to the data element with the index value of 1000 is drafted.

Moreover, in order to facilitate the user to easily understand the force condition of the tool holder 1, the method for displaying the force of the tool holder further includes a force color-displaying process. The force color-displaying process includes Step S21 to Step S23.

Step S21: the processing device 10 is provided with a plurality of value ranges, wherein the value ranges correspond to a plurality of colors, and each of the colors is different from the others.

Step S22: the processing device 10 calculates a cutting force (C.F.) of each of the data points, wherein the cutting force of each of the data points is CF, the X-coordinate of each of the data points is x, and the Y-coordinate of each of the data points is y; the cutting force is calculated based on the following formula: $CF=\sqrt{x^2+y^2}$.

Step S23: one of the colors corresponding to one of the value ranges within which the cutting force of each of the data points falls is selected, and each of the data points is displayed in the selected color.

Referring to FIG. 5, in the current embodiment, the processing device 10 is established with the value ranges. The value ranges could be, for example, between 0 N·m and 0.57 N·m, between 0.58 N·m and 1.13 N·m, between 1.14 N·m and 1.7 N·m, between 1.71 N·m and 2.27 N·m, between 2.28 N·m and 2.83 N·m, and between 2.84 N·m and 3.4 N·m. Each of the value ranges has a corresponding color. The processing device 10 selects the corresponding color as the cutting force of each of the data points falls within one of the value ranges to display the data points in the force distribution diagram 31 of the coordinate diagram 30. In this way, the user could quickly determine the force condition based on the color of the data point (which corresponds to the cutting force of the data point) rather than performing thorough analysis on values, so that time for analysis and determination could be saved, thereby improving working efficiency.

Referring to FIG. 5, the display interface 21 includes a first display region R1, a second display region R2, a third display region R3, a fourth display region R4, and a fifth display region R5. The first display region R1 displays the force distribution diagram 31 of the coordinate diagram 30. The second display region R2 displays a waveform of the first calibrated bending value, a waveform of the second calibrated bending value, and a waveform of the cutting force of the force data. The third display region R3 displays a waveform of the calibrated tension value of the force data. The fourth display region R4 displays a waveform of the calibrated torsion value of the force data. The fifth display region R5 displays a waveform of a temperature value converted from the temperature detection signal VS5 outputted by the temperature detection module 5. In the current embodiment, images of the display interface 21 are drawn through OpenGL, but not limited thereto.

Referring to FIG. 6 and FIG. 7, the method for displaying the force of the tool holder further includes repeatedly performing Step S16 to Step S18 to form a plurality of force distribution diagrams 31 that are stacked.

Step S16: the coordinate diagram 30 further includes a Z-axis, and a first force distribution diagram 31 is displayed in the Z-axis (the force distribution diagram 31 is located on a XY plane that is perpendicular to the Z-axis). The coordinate diagram 30 is displayed on the first display region R1 of the display interface 21 of the display screen 20 in a rotatable viewing angle. The user could adjust the viewing angle of the coordinate diagram 30 through mouse, touch pad, or other operating devices.

Step S17: the processing device 10 extracts another predetermined number of data elements from the data elements to form another data element batch. In the current embodiment, the processing device 10 extracts the data elements with the index values from 1 to 1000 to form a first of the data element batches, extracts the data elements with the index values from 1001 to 2000 to form a second of the data element batches, and extracts the data elements with the index values from 2001 to 3000 to form a third of the data element batches, and so on and so forth.

Step S18: the processing device 10 generates the X-coordinate of the X-axis according to the first bending value of each of the data elements of the another data element batch, generates the Y-coordinate of the Y-axis according to the second bending value of each of the data elements in the another data element batch, drafts a data point corresponding to one of the data elements of the another data element batch in the coordinate diagram 30 according to the X-coordinate and the Y-coordinate generated, and drafts a plurality of data points respectively corresponding to the data elements of the another data element batch to form another one of the force distribution diagrams 31 in the coordinate diagram 30, wherein the another force distribution diagram 31 is adjacent to one of the force distribution diagram 31 that is formed earlier in the Z-axis. In the current embodiment, the processing device 10 firstly drafts the data points of the force distribution diagram 31 corresponding to the data elements of the first of the data element batches with the index values from 1 to 1000 in the coordinate diagram 30. Then, the processing device 10 subsequentially drafts the data points of the another force distribution diagram 31 corresponding to the data elements of the second of the data element batches with the index values from 1001 to 2000 in the coordinate diagram 30, wherein the data points of the force distribution diagram 31 corresponding to the first of the data element batches and the data points of the another force distribution diagram 31 corresponding to the second of the data element batches are displayed adjacently in the Z-axis (the another force distribution diagram 31 is located on another XY plane that is perpendicular to the Z-axis; the XY plane and the another XY plane are adjacent in the Z-axis.), and the data points of the another force distribution diagram 31 corresponding to the second of the data element batches are located above the data points of the force distribution diagram 31 corresponding to the first of the data element batches in the Z-axis. The data points of the remaining force distribution diagrams 31 corresponding to the third of the data element batches and the subsequent data element batches are sequentially stacked upward along the Z-axis. In this way, the force distribution diagrams 31 could be sequentially added to the coordinate diagram 30 based on a generation order. Moreover, the display interface 21 could display a time axis control interface 40. By adjusting time on a time axis of the time axis control interface 40, the user could view the data points of the force distribution diagram 31 in the first display region R1 and the waveforms in the second display region R2 to the fifth display region R2 R5 at a particular time.

The Z-axis of the coordinate diagram 30 is provided with a predetermined displaying number. When a number of the force distribution diagrams 31 formed exceeds the predetermined displaying number, one of the force distribution diagrams 31 that is early formed is replaced by another one of the force distribution diagrams 31 that is lately formed, so that the force distribution diagrams 31 exceeding the predetermined displaying number are subsequently displayed along the Z-axis. For example, the user could set the predetermined displaying number to be 20 force distribution diagrams 31. The processing device 10 drafts the force distribution diagram 31 corresponding to the first of the data element batches and the force distribution diagrams 31 corresponding to the second to a twentieth of the data element batches in the coordinate diagram 30 in sequent. Afterwards, when the processing device 10 drafts the force distribution diagram 31 corresponding to a twenty-first of the data element batches, the processing device 10 removes the force distribution diagram 31 corresponding to the first of the data element batches, moves the force distribution diagrams 31 corresponding to the second to the twentieth of the data element batches downward, and drafts the force distribution diagram 31 corresponding to the twenty-first of the data element batches, so that the predetermined displaying number is maintained at 20, i.e., the force distribution diagrams 31 corresponding to the second to the twenty-first of the data element batches are displayed in the coordinate diagram 30.

Referring to FIG. 5 and FIG. 7, the coordinate diagram 30 could further display a greatest torsion value and a greatest tension value, wherein a drafting way thereof is explained below.

The processing device 10 extracts the torsion value having the greatest absolute value from the data elements of the data element batch, defines the torsion value having the greatest absolute value as a greatest torsion value, and an arc 32 corresponding to the greatest torsion value is displayed in the coordinate diagram 30. The user is required to set a greatest displaying torsion value for displaying the arc 32. The arc 32 correspondingly has a central angle. The central angle is a. The central angle is calculated by using the following formula:

$$a = \left(\frac{\mathrm{Tm}}{\mathrm{Td}}\right) \times 180°$$

wherein Tm is the greatest torsion value is Tm, and Td is the greatest displaying torsion value is Td.

Then, the processing device 10 extracts the tension value having the greatest absolute value from the data elements of the data element batches and defines the tension value having the greatest absolute value as a greatest tension value. The processing device 10 takes the greatest tension value as a Z-coordinate of the Z-axis and displays the arc 32 on a plane corresponding to the Z-coordinate in the coordinate diagram 30.

In the current embodiment, the torsion value having the greatest absolute value and the tension value having the greatest absolute value are extracted from the data points displayed in the coordinate diagram 30 which correspond to the data elements of the data element batches, thereby forming the greatest torsion value and the greatest tension value.

The user sets the greatest displaying torsion value Td to be 1.36 N·m. The greatest torsion value Tm extracted from the data elements of the first of the data element batches is 1.29 N·m. The central angle a calculated by using the formula is 170.7°. The greatest tension value extracted from the data elements of the first of the data element batch is 29.4 N. In this way, the processing device 10 drafts the arc 32 with a radian of 170.7° (centered at the origin (0,0) of the coordinate diagram 30) on the plane with the Z-coordinate of 29.4 N in the distribution diagram 31 of the coordinate diagram 30, thereby displaying the greatest torsion value and the greatest tension value of the first of the data element batch. The greatest torsion value is +1.29 N·m, so that the arc 32 is displayed in a top half portion of the X-axis of the coordinate diagram 30 (a first quadrant I and a second quadrant II), and the arc 32 is displayed in a first color. On the contrary, when the greatest torsion value is -1.29 N·m, the arc 32 is correspondingly displayed in a bottom half portion of the X-axis of the coordinate diagram 30 (a third quadrant III and a fourth quadrant IV), and the arc 32 is displayed in a second color. The first color and the second color are different colors, so that the user could easily determine whether the greatest torsion value is positive or negative.

When the data points of the force distribution diagrams 31 corresponding to the first to the twentieth of the data element batches are displayed, the greatest torsion value (displayed through the arc length of the arc 32) and the greatest tension value in the data elements of the first to the twentieth of the data element batches are displayed) When the data points of the force distribution diagrams 31 corresponding to the second to the twenty-first of the data element batches are displayed, the greatest torsion value (displayed through the arc length of the arc 32) and the greatest tension value in the data elements of the second to the twenty-first of the data element batches are displayed.

Referring to FIG. 8, in the current embodiment, the method for displaying the force of the tool holder further includes a blade color-displaying process. The blade color-displaying process includes Step S31 to Step S33. Through the blade color-displaying process (Step S31 to Step S33), the user could clearly and easily observe the force condition of each of the blades of the tool 1a. The blade color-displaying process (Step S31 to Step S33) is explained below.

Step S31: a central reference point P is defined on the coordinate diagram 30, a circle C is defined with a predetermined radius and centered at the central reference point P, and the data points corresponding to the data element batch are classified into a plurality of central data points located within a range of the circle C and a plurality of peripheral data points located outside the range of the circle C. Referring to FIG. 9, in the current embodiment, the central reference point P is the origin (0,0) of the coordinate diagram 30 after the calibration process. The circle C is drawn, for example, with the central reference point P (0,0) as a center and the predetermined radius r of 0.5 N·m. The data points located within the circle C are the central data points. The data points located outside the circle C are the peripheral data points. The predetermined radius r is not limited to 0.5 N m and could be adjusted to meet different requirements. Moreover, in the current embodiment, a distribution angle of the blades is 360° as an example. Four quadrants could be divided based on the X-axis and the Y-axis and include a first quadrant I, a second quadrant II, a third quadrant III, and a fourth quadrant IV. The first quadrant I is defined to be between 0° and 89°. The second quadrant II is defined to be between 90° and 179°. The third quadrant III is defined to be between 180° and 269°. The fourth quadrant IV is defined to be between 270° and 359°.

Step S32: the peripheral data points are classified based on a plurality of angle ranges and the peripheral data points located within different angle ranges are displayed in respective colors from a plurality of colors, wherein each of the colors of the peripheral data points is different from the others, and a number of the angle ranges is equal to a number of the blades of the tool 1a. Referring to FIG. 10, in the current embodiment, the number of the blades is 3, and each of the blades is represented in different colors.

Referring to FIG. 11 to FIG. 13, the angle ranges are generated by performing Step S321 to Step S324.

Step S321: a number of the peripheral data points located along a plurality of radial extension lines at different angles from the central reference point P is counted. Referring to FIG. 12, the processing device 10 counts the number of the peripheral data points in the first of the data element batches that are distributed along the radial extension lines extending between 0° and 359°.

Step S322: the angle of one of the radial extension lines having the greatest number of the peripheral data points is defined as a blade angle. Referring to FIG. 12, the radial extension line at the angle of 348° has the greatest number of the peripheral data points. The angle of 348° is defined as a first blade angle.

Step S323: a plurality of another blade angles is calculated based on the blade angle and the number of the blades of the tool 1a. Referring to FIG. 12 and FIG. 13, in the current embodiment, the number of the blades is 3, 360° is divided by 3 to be 120°, and the another blade angles include a second blade angle and a third blade angle. In other words, a range of each of the blades is 120°. The first blade angle is 348° and the range of each of the blades is 120°, thereby deducing that the second blade angle is 108° and the third blade angle is 228°.

Step S324: the blade angle and the another blade angles are respectively expanded to generate the angle ranges, wherein one of the angle ranges covers the blade angle and the others of the angle ranges respectively cover the another blade angles. For example, the first blade angle of 348° is expanded by 60°, so that a first blade range is calculated to be between 288° and 47°, and so on and so forth. The second blade angle of 108° is expanded by 60°, so that a second blade range is between 48° and 167°. The third blade angle of 228° is expanded by 60°, so that a third blade range is between 168° and 287°.

Step S33: the central data points are displayed in another color different from the colors of the peripheral data points. The central data points are displayed in the another color different from the colors of the peripheral data points. Referring to FIG. 10, referring to FIG. 10, the central data points are displayed in the another color (for example: black) different from the colors of the peripheral data points (for example: purple, light blue, dark blue).

The diagram shown in FIG. 10 could be drawn through performing the blade color-displaying process. In this way, the user could clearly and easily observe the force condition of each of the blades of the tool 1a. When one of the blades of the tool 1a is damaged, the damaged blade could be identified through performing the blade color-displaying process, thereby facilitating rapid repair and maintenance.

In summary, the cutting point of the tool holder acting on the workpiece has a large amount of important information. The present invention could immediately measure the force of the tool holder experienced during machining. By analyzing the force of the tool holder experienced during machining, the accuracy of the workpiece could be improved and the condition of the tool holder could be predicted, thereby ensuring the stability of the production efficiency.

In other embodiments, the circuit board 3 could further include an acceleration detection module (not shown). The acceleration detection module is electrically connected to the controller 4b and is configured to detect an acceleration of the tool holder 1 along the three axes (i.e., the first axial direction L1, the second axial direction L2, and the third axial direction L3) to correspondingly output an acceleration detection signal. The controller 4b transmits the acceleration detection signal to the processing device 10 through the wireless transmission module 6 and the antenna 7. The original force data further includes a plurality of original acceleration values of the three axes. The processing device 10 performs the conversion process on each of the original data group and performs the calibration process on the original acceleration values of the three axes to obtain calibrated acceleration values of the three axes. Each of the data elements of the force data further includes acceleration values of the three axes. The acceleration values in the three axes are the calibrated acceleration values of the three axes. The processing device 10 displays the acceleration value of the three axes on the display interface 21, for example, as acceleration data points of the three axes. For example, the first display region R1 could be switched between displaying the force distribution diagram 31 and displaying the acceleration data points of the three axes. Alternatively, the acceleration data points of the three axes could also be displayed in other display regions.

## Claims

1. A method for displaying a force of a tool holder (1), performed in a monitoring system, wherein the monitoring system comprises a processing device (10) and a display screen (20), the processing device (10) is wirelessly connected to a force-measuring device (2) of a tool holder (1) for signal communication, and the force-measuring device (2) detects a force of the tool holder (1) and generates an original force data; the method for displaying the force of the tool holder (1) comprising:

    receiving, by the processing device (10), the original force data and converting, by the processing device (10), the original force data to a force data;
    obtaining, by the processing device (10), a plurality of data elements from the force data, wherein each of the data elements of the force data comprises a first bending value and a second bending value, the first bending value corresponds to a bending exerted on the tool holder (1) along a first axial direction (L1), the second bending value corresponds to a bending exerted on the tool holder (1) along a second axial direction (L2), and the first axial direction (L1) is perpendicular to the second axial direction (L2);
    extracting, by the processing device (10), a predetermined number of data elements from the data elements of the force data to form a data element batch;
    establishing, by the processing device (10), a coordinate diagram (30) on a display interface (21) of the display screen (20), wherein the coordinate diagram (30) comprises an X-axis and a Y-axis; and
    generating, by the processing device (10), a X-coordinate of the X-axis according to the first bending value of each of the data elements of the data element batch, generating, by the processing device (10), a Y-coordinate according to the second bending value of each of the data elements of the data element batch, drafting, by the processing device (10), a data point corresponding to one of the data elements of the data element batch in the coordinate diagram (30) according to the X-coordinate and the Y-coordinate generated, and drafting, by the processing device (10), a plurality of data points respectively corresponding to the data elements of the data element batch to form a force distribution diagram (31) in the coordinate diagram (30).

2. The method as claimed in claim 1, wherein the coordinate diagram (30) comprises a Z-axis, and the force distribution diagram (31) is displayed along the Z-axis; the method further comprises repeatedly performing the following steps to form a plurality of force distribution diagrams (31):

    extracting, by the processing device (10), another predetermined number of data elements from the data elements of the force data to form another data element batch; and
    generating, by the processing device (10), the X-coordinate of the X-axis according to the first bending value of each of the data elements of the another data element batch, generating, by the processing device (10), the Y-coordinate of the Y-axis according to the second bending value of each of the data elements of the another data element batch, drafting, by the processing device (10), a data point corresponding to one of the data elements of the another data element batch in the coordinate diagram (30) according to the X-coordinate and the Y-coordinate generated, and drafting, by the processing device (10), a plurality of data points respectively corresponding to the data elements of the another data element batch to form another one of the force distribution diagrams (31) in the coordinate diagram (30), wherein the another one of the force distribution diagrams (31) is adjacent to one of the force distribution diagrams (31) formed earlier in the Z-axis.

3. The method as claimed in claim 2, wherein the force distribution diagrams (31) are sequentially added to the coordinate diagram (30) based on a generation order; the Z-axis of the coordinate diagram (30) is provided with a predetermined displaying number; when a number of the force distribution diagrams (31) formed exceeds the predetermined displaying number, one of the force distribution diagrams (31) that is early formed is replaced by another one of the force distribution diagrams (31) that is lately formed, so that the force distribution diagrams (31) exceeding the predetermined displaying number are subsequently displayed along the Z-axis.

**4.** The method as claimed in any one of claim 2 and claim 3, wherein the coordinate diagram (30) is displayed on the display interface (21) of the display screen (20) in a rotatable viewing angle.

**5.** The method as claimed in claim 1, wherein each of the data elements of the force data obtained by the processing device (10) has an index value; the index values of the data elements of the force data increase sequentially; the processing device (10) sequentially extracts the predetermined number of data elements according to the index values of the data elements of the force data to form the data element batch.

**6.** The method as claimed in claim 1, wherein the processing device (10) is provided with a plurality of value ranges; the value ranges respectively correspond to a plurality of colors, and each of the colors is different from the others; the method further comprises a force color-displaying process; the force color-displaying process comprises:

calculating, by the processing device (10), a cutting force of each of the data points, wherein the cutting force of each of the data points is CF, the X-coordinate of each of the data points is x, the Y-coordinate of each of the data points is y, and the cutting force of each of the data points is calculated by using the following formula: $CF=\sqrt{x^2+y^2}$; and

selecting, by the processing device (10), one of the colors corresponding to one of the value ranges within which the cutting force of each of the data points falls, and displaying each of the data points in the selected color.

**7.** The method as claimed in claim 1, wherein the tool holder (1) is connected to a tool (1a); the tool (1a) has a plurality of blades; the method comprises a blade color-displaying process; the blade color-displaying process comprises:

defining, by the processing device (10), a central reference point (P) on the coordinate diagram (30), defining a circle (C) with a predetermined radius (r) and centered at the central reference point (P), and classifying the data points corresponding to the data element batch into a plurality of central data points located within a range of the circle (C) and a plurality of peripheral data points located outside the range of the circle (C);

classifying, by the processing device (10), the peripheral data points based on a plurality of angle ranges and displaying the peripheral data points located within different angle ranges in respective colors from a plurality of colors, wherein each of the colors of the peripheral data points is different from the others, and a number of the angle ranges is equal to a number of the blades of the tool (1a).

**8.** The method as claimed in claim 7, wherein the angle ranges are generated by performing steps of:

counting a number of the peripheral data points located along a plurality of radial extension lines at different angles from the central reference point (P);

defining the angle of one of the radial extension lines having the greatest number of the peripheral data points as a blade angle;

calculating a plurality of another blade angles based on the blade angle and the number of the blades of the tool (1a);

expanding the blade angle and the another blade angles to generate the angle ranges, wherein one of the angle ranges covers the blade angle and the others of the angle ranges respectively cover the another blade angles.

**9.** The method as claimed in claim 7, wherein the blade color-displaying process further comprises:
displaying the central data points in another color different from the colors of the peripheral data points.

**10.** The method as claimed in claim 1, wherein the original force data comprises a plurality of original data groups; each of the original data groups comprises a first original bending value and a second original bending value;

wherein after the processing device (10) receives the original force data, the processing device (10) performs a conversion process on each of the original data groups to obtain the force data; the force data comprises a plurality of converted data groups; each of the converted data groups comprises a first calibrated bending value and a second calibrated bending value;

wherein the conversion process comprises reducing the first original bending value of each of the original data groups by a first standard bending value to correspondingly obtain the first calibrated bending value, and reducing the second original bending value of each of the original data groups by a second standard bending value to corresponding obtain the second calibrated bending value;
wherein the first bending value and the second bending value of each of the data elements of the force data obtained by the processing device (10) are the first calibrated bending value and the second calibrated bending value of each of the converted data groups.

**11.** The method as claimed in claim 10, wherein the conversion process is to reduce the first original bending value by the first standard bending value and then multiply by a first compensation coefficient to correspondingly obtain the first calibrated bending value, and reduce the second original bending value by the second standard bending value and then multiply by a second compensation coefficient to correspondingly obtain the second calibrated bending value.

**12.** The method as claimed in claim 1, wherein the original force data comprises a plurality of original torsion values around a third axial direction (L3), and the third axial direction (L3) is perpendicular to the first axial direction (L1) and the second axial direction (L2);

wherein each of the data elements of the force data comprises a torsion value, and each of the torsion values of the data elements of the force data corresponds to a torsion exerted on the tool holder (1) around the third axial direction (L3);
wherein the processing device (10) extracts one of the torsion values of the data elements of the data element batch having the greatest absolute value, and defines the torsion value having the greatest absolute value as a greatest torsion value;
wherein an arc (32) corresponding to the greatest torsion value is displayed in the coordinate diagram (30).

**13.** The method as claimed in claim 12, further comprising setting a greatest displaying torsion value, wherein the arc (32) correspondingly has a central angle, the central angle is a, and the central angle is calculated by using the following formula:

$$a = \left(\frac{Tm}{Td}\right) \times 180^\circ$$

, wherein Tm is the greatest torsion value, and Td is the greatest displaying torsion value.

**14.** The method as claimed in claim 12, wherein the original force data comprises a plurality of original tension values along the third axial direction (L3), each of the data elements of the force data comprises a tension value, and the tension value corresponds to a tension exerted on the tool holder (1) along the third axial direction (L3);

wherein the processing device (10) extracts one of the tension values of the data elements of the data element batch having the greatest absolute value, and defines the torsion value having the greatest absolute value as a greatest tension value;
wherein the coordinate diagram (30) comprises a Z-axis;
wherein the processing device (10) takes the greatest tension value as a Z-coordinate of the Z-axis and displays the arc (32) on a plane corresponding to the Z-coordinate in the coordinate diagram (30).

**15.** The method as claimed in claim 2, wherein the original force data comprises a plurality of original torsion values around a third axial direction (L3), and the third axial direction (L3) is perpendicular to the first axial direction (L1) and the second axial direction (L2);

wherein each of the data elements of the force data comprises a torsion value, and each of the torsion values of the data elements of the force data corresponds to one of the original torsion values around the third axial direction (L3);
wherein the processing device (10) extracts one of the torsion values of the data elements of the data element batches having the greatest absolute value, and defines the torsion value having the greatest absolute value as a greatest torsion value;
wherein the processing device (10) displays an arc (32) corresponding to the greatest torsion value in the coordinate diagram (30).

**16.** The method as claimed in claim 15, wherein the original force data comprises a plurality of original tension values along the third axial direction (L3), each of the data elements of the force data comprises a tension value, and each of the tension values of the data elements of the force data corresponds to one of the original tension values along the third axial direction (L3);

wherein the processing device (10) extracts one of the tension values of the data elements of the data element batches having the greatest absolute value, and defines the tension value having the greatest absolute value as a greatest tension value;

wherein the coordinate diagram (30) comprises the Z-axis;

wherein the processing device (10) takes the greatest tension value as a Z-coordinate of the Z-axis and displays the arc (32) on a plane corresponding to the Z-coordinate in the coordinate diagram (30).

**17.** The method as claimed in any one of claim 12 and claim 15, wherein the original force data comprises a plurality of original data groups, and each of the original data groups comprises one of the original torsion values;

wherein after the processing device (10) receives the original force data, the processing device (10) performs a conversion process on each of the original data groups to obtain the force data; the force data comprises a plurality of converted data groups; each of the converted data groups comprises a calibrated torsion value;

wherein the conversion process comprises reducing the original torsion value of each of the original data groups by a standard torsion value to correspondingly obtain the calibrated torsion value;

wherein the torsion value of each of the data elements of the force data is the calibrated torsion value of each of the converted data groups.

**18.** The method as claimed in claim 17, wherein the conversion process is to reduce the original torsion value by the standard torsion value and then multiply by a torsion compensation coefficient to correspondingly obtain the calibrated torsion value.

**19.** The method as claimed in any one of claim 14 and claim 16, wherein the original force data comprises a plurality of original data groups, and each of the original data groups comprises one of the original tension values;

wherein after the processing device (10) receives the original force data, the processing device (10) performs a conversion process on each of the original data groups to obtain the force data; the force data comprises a plurality of converted data groups; each of the converted data groups comprises a calibrated tension value;

wherein the conversion process comprises reducing the original tension value of each of the original data groups by a standard tension value to correspondingly obtain the calibrated tension value;

wherein the tension value of each of the data elements of the force data is the calibrated tension value of each of the converted data groups.

**20.** The method as claimed in claim 19, wherein the conversion process is to reduce the original tension value by the standard tension value and then multiply by a tension compensation coefficient to correspondingly obtain the calibrated tension value.

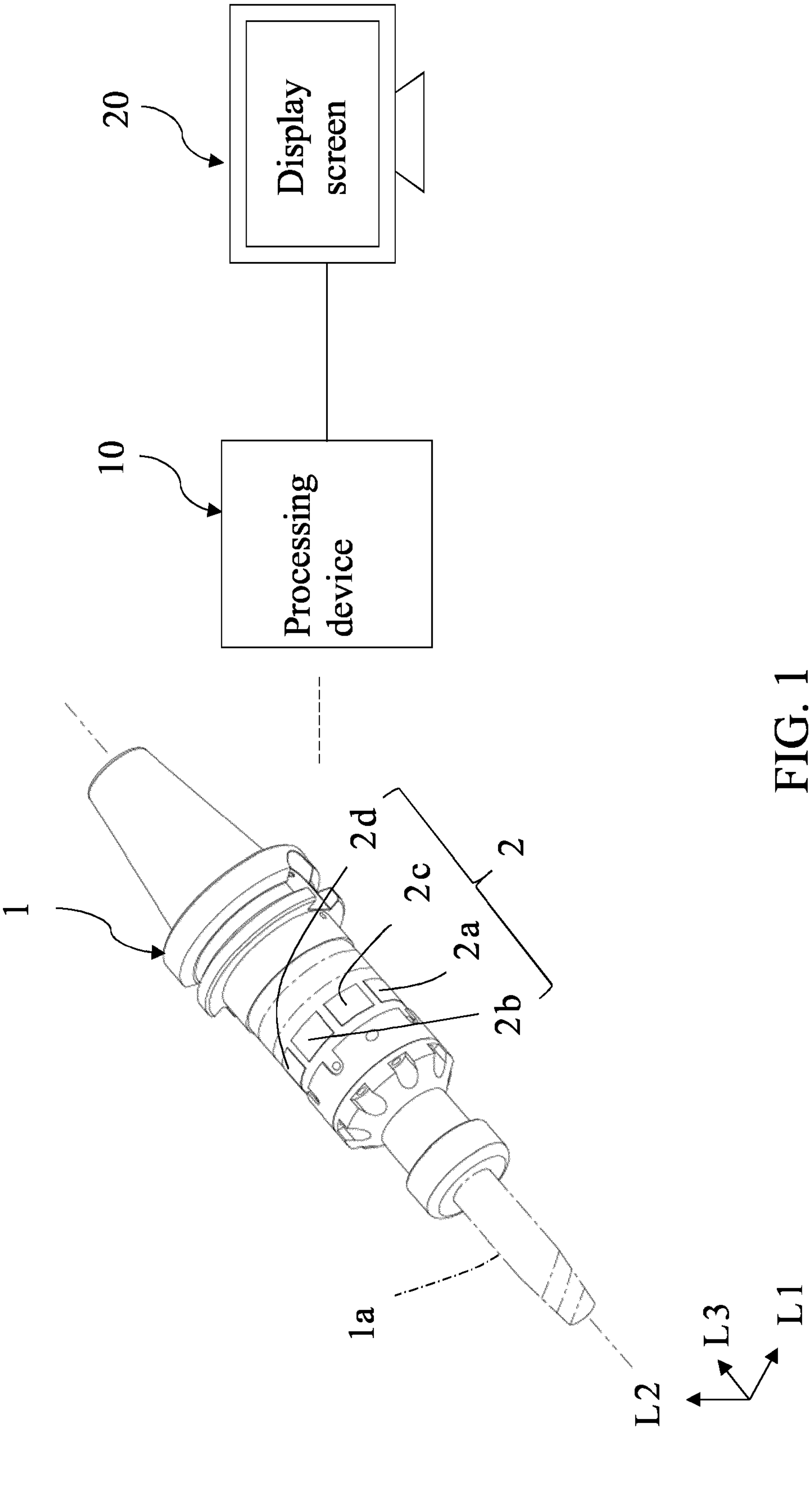
20
Display screen
10
Processing device
1
2d
2c
2a
2b
2
1a
L2
L3
L1

FIG. 1

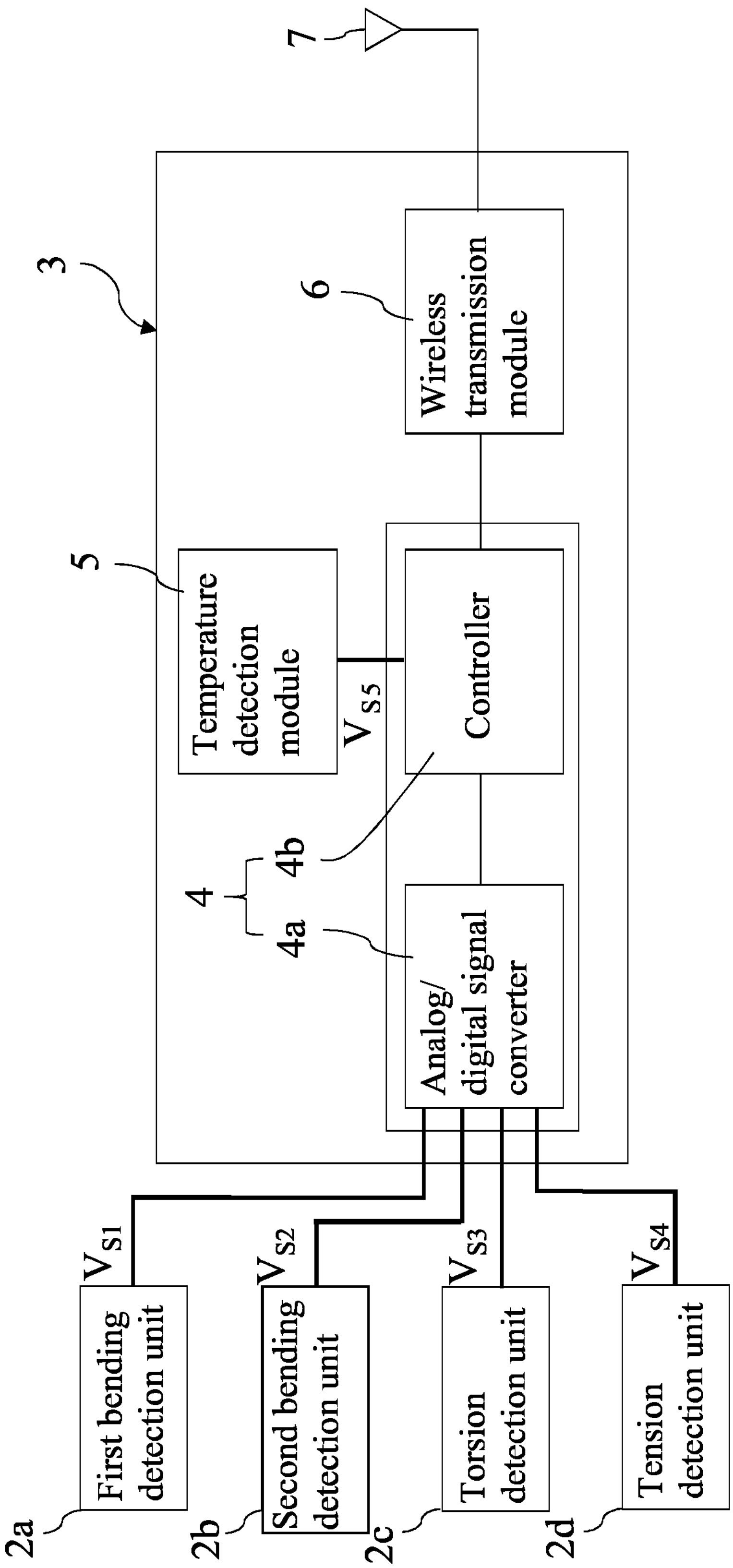
7
3
6
Wireless transmission module
5
Temperature detection module
$V_{S5}$
Controller
4
4a
4b
Analog/ digital signal converter
$V_{S1}$
$V_{S2}$
$V_{S3}$
$V_{S4}$
First bending detection unit
Second bending detection unit
Torsion detection unit
Tension detection unit
2a
2b
2c
2d

FIG. 2

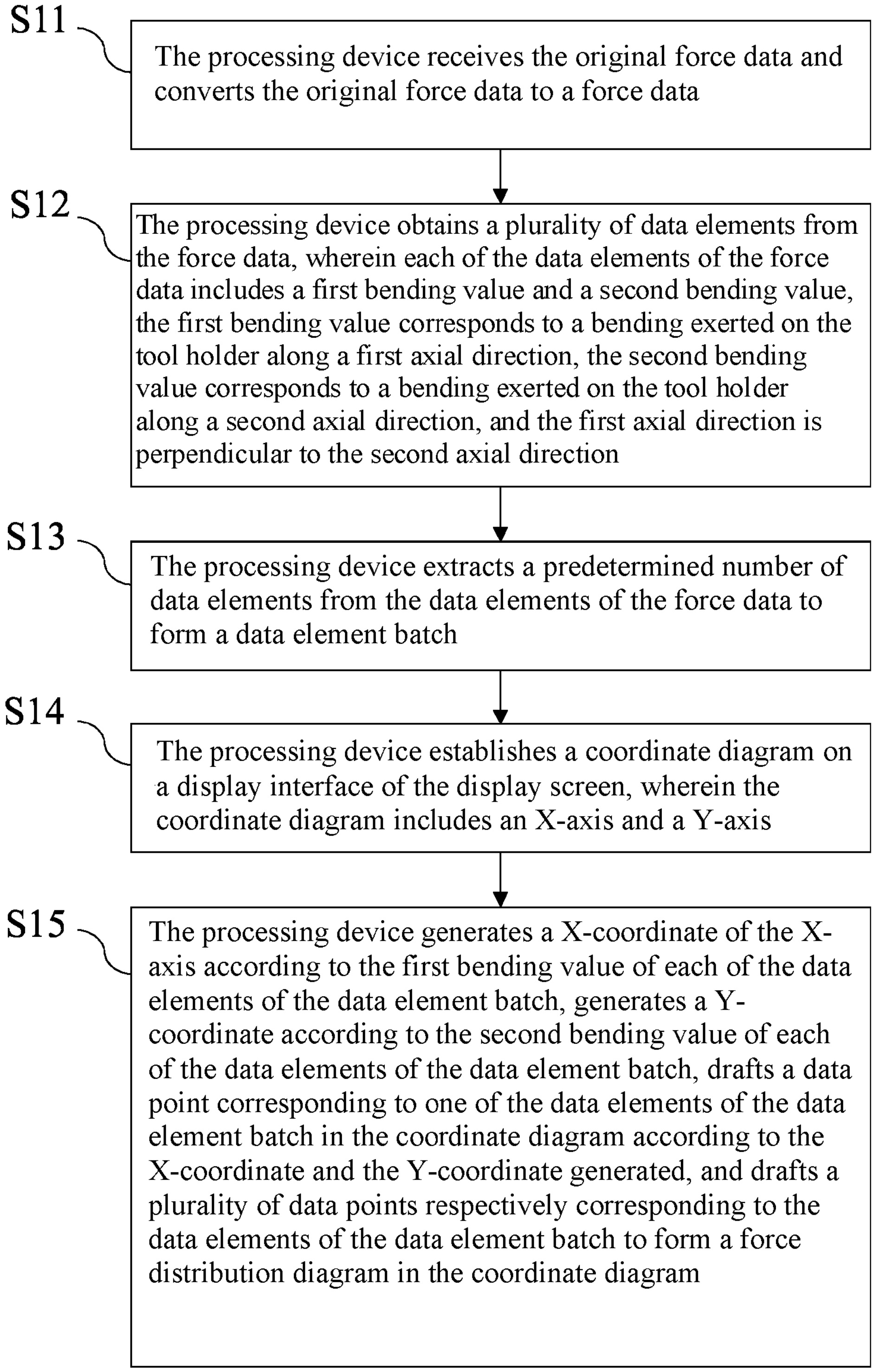
S11
The processing device receives the original force data and converts the original force data to a force data
S12
The processing device obtains a plurality of data elements from the force data, wherein each of the data elements of the force data includes a first bending value and a second bending value, the first bending value corresponds to a bending exerted on the tool holder along a first axial direction, the second bending value corresponds to a bending exerted on the tool holder along a second axial direction, and the first axial direction is perpendicular to the second axial direction
S13
The processing device extracts a predetermined number of data elements from the data elements of the force data to form a data element batch
S14
The processing device establishes a coordinate diagram on a display interface of the display screen, wherein the coordinate diagram includes an X-axis and a Y-axis
S15
The processing device generates a X-coordinate of the X-axis according to the first bending value of each of the data elements of the data element batch, generates a Y-coordinate according to the second bending value of each of the data elements of the data element batch, drafts a data point corresponding to one of the data elements of the data element batch in the coordinate diagram according to the X-coordinate and the Y-coordinate generated, and drafts a plurality of data points respectively corresponding to the data elements of the data element batch to form a force distribution diagram in the coordinate diagram

FIG. 3

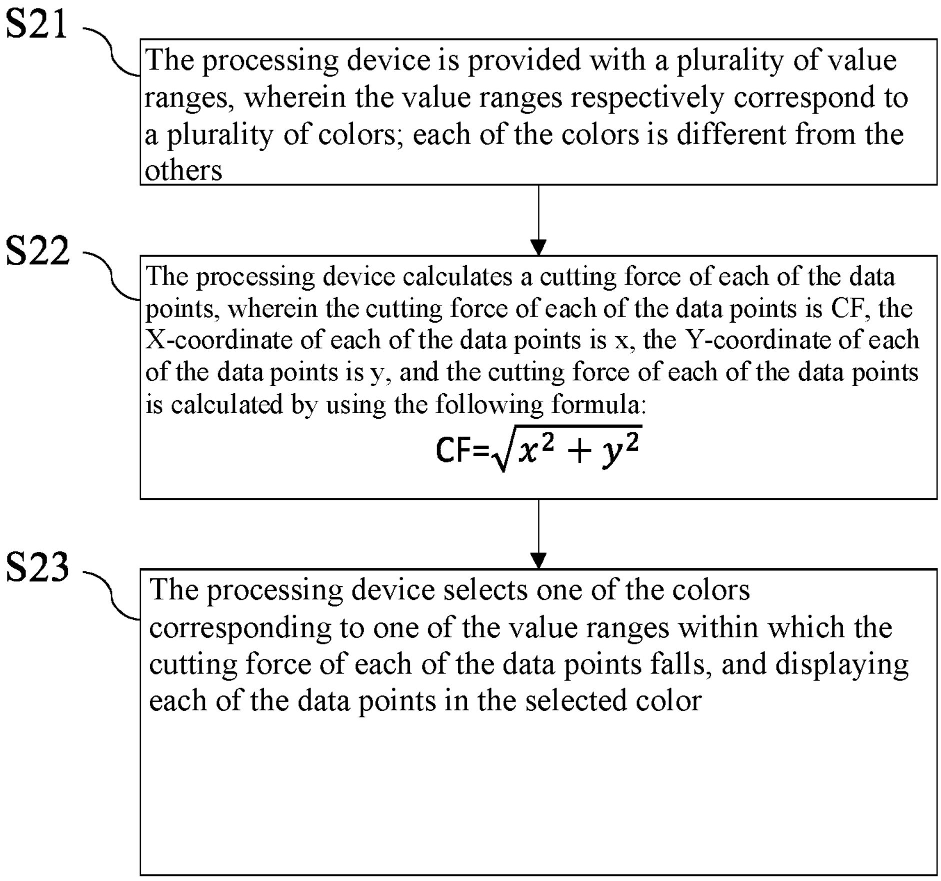
S21
The processing device is provided with a plurality of value ranges, wherein the value ranges respectively correspond to a plurality of colors; each of the colors is different from the others
S22
The processing device calculates a cutting force of each of the data points, wherein the cutting force of each of the data points is CF, the X-coordinate of each of the data points is x, the Y-coordinate of each of the data points is y, and the cutting force of each of the data points is calculated by using the following formula:
$CF=\sqrt{x^2 + y^2}$
S23
The processing device selects one of the colors corresponding to one of the value ranges within which the cutting force of each of the data points falls, and displaying each of the data points in the selected color

FIG. 4

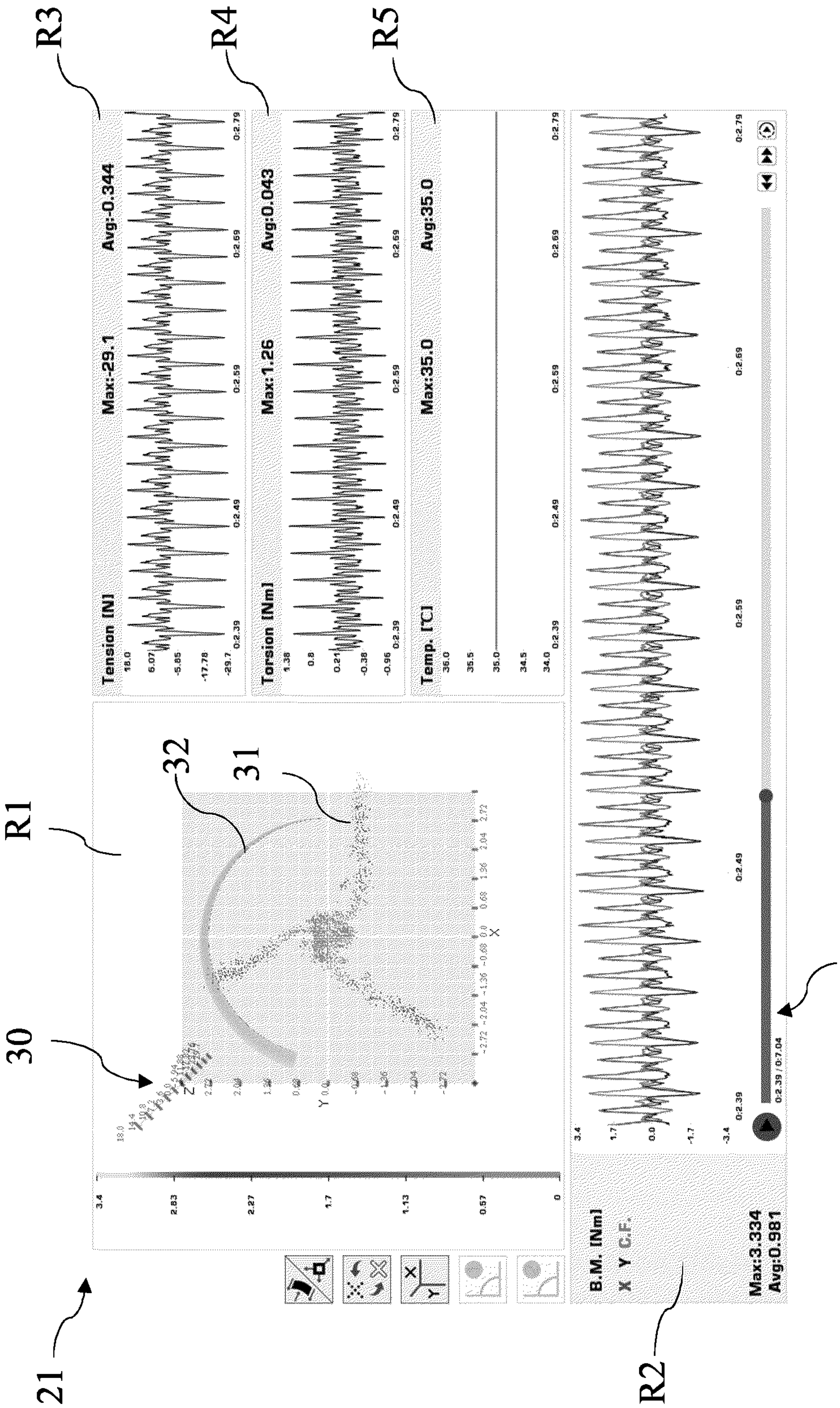
R1
R2
R3
R4
R5
21
30
31
32
40
Tension [N]
Max:-29.1
Avg:-0.344
Torsion [Nm]
Max:1.26
Avg:0.043
Temp. [°C]
Max:35.0
Avg:35.0
B.M. [Nm]
X Y C.F.
Max:3.334
Avg:0.981
0:2.39 / 0:7.04

FIG. 5

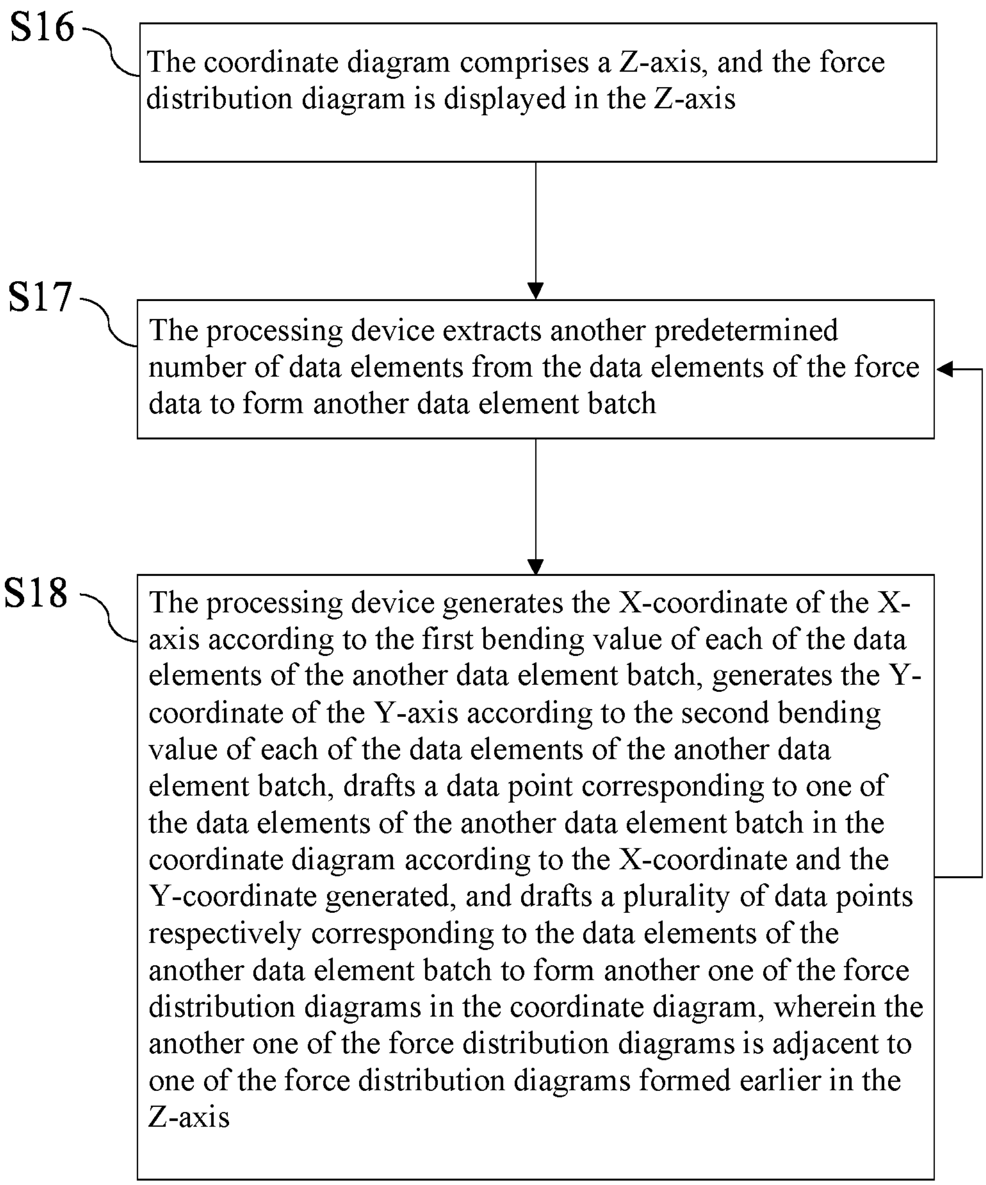
S16
The coordinate diagram comprises a Z-axis, and the force distribution diagram is displayed in the Z-axis
S17
The processing device extracts another predetermined number of data elements from the data elements of the force data to form another data element batch
S18
The processing device generates the X-coordinate of the X-axis according to the first bending value of each of the data elements of the another data element batch, generates the Y-coordinate of the Y-axis according to the second bending value of each of the data elements of the another data element batch, drafts a data point corresponding to one of the data elements of the another data element batch in the coordinate diagram according to the X-coordinate and the Y-coordinate generated, and drafts a plurality of data points respectively corresponding to the data elements of the another data element batch to form another one of the force distribution diagrams in the coordinate diagram, wherein the another one of the force distribution diagrams is adjacent to one of the force distribution diagrams formed earlier in the Z-axis

FIG. 6

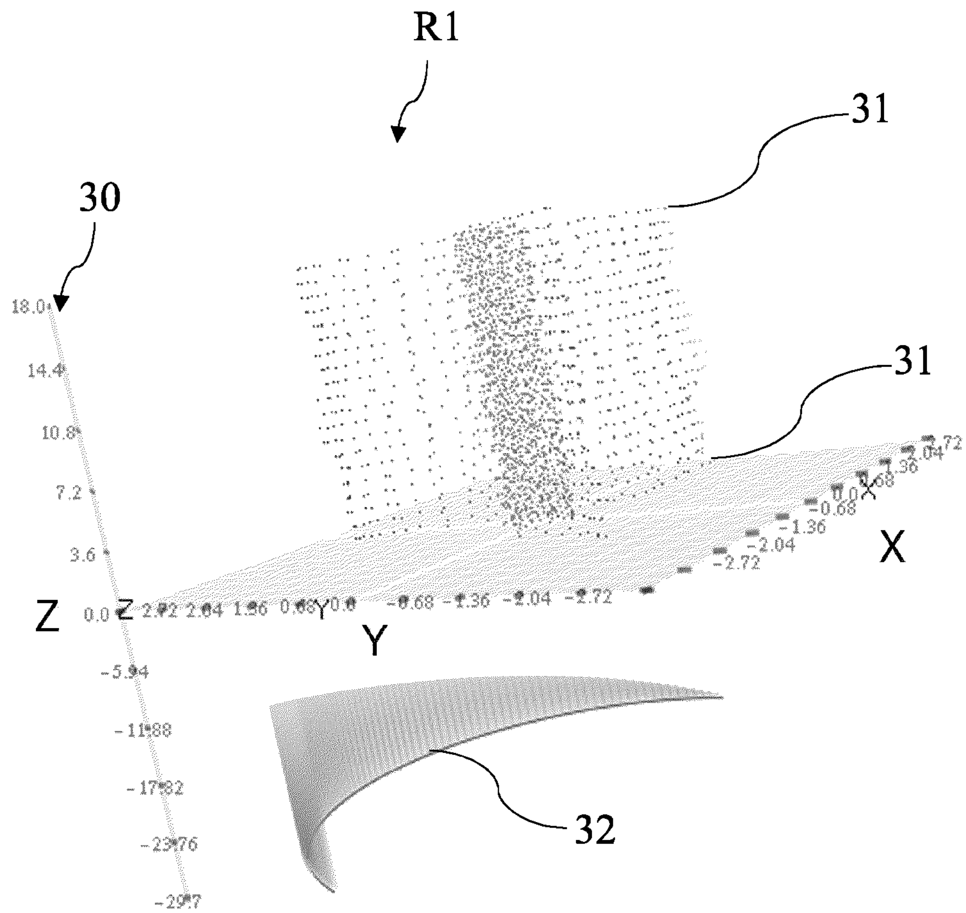


FIG. 7

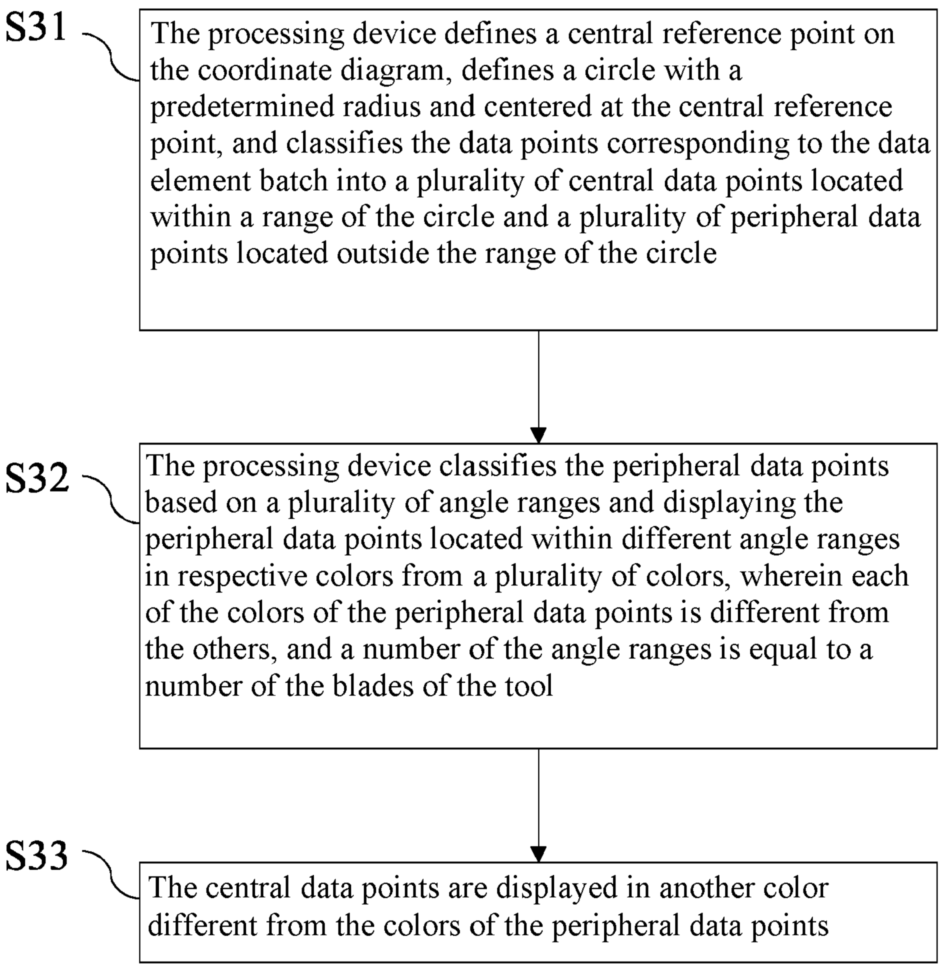
S31
The processing device defines a central reference point on the coordinate diagram, defines a circle with a predetermined radius and centered at the central reference point, and classifies the data points corresponding to the data element batch into a plurality of central data points located within a range of the circle and a plurality of peripheral data points located outside the range of the circle
S32
The processing device classifies the peripheral data points based on a plurality of angle ranges and displaying the peripheral data points located within different angle ranges in respective colors from a plurality of colors, wherein each of the colors of the peripheral data points is different from the others, and a number of the angle ranges is equal to a number of the blades of the tool
S33
The central data points are displayed in another color different from the colors of the peripheral data points

FIG. 8

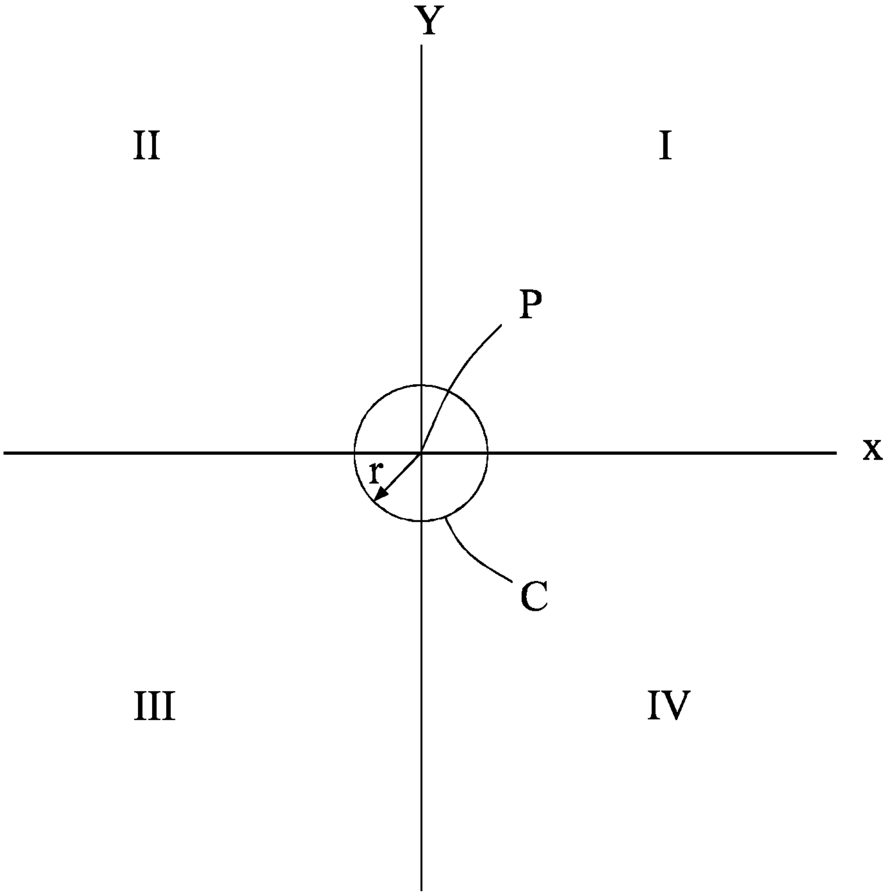


FIG. 9

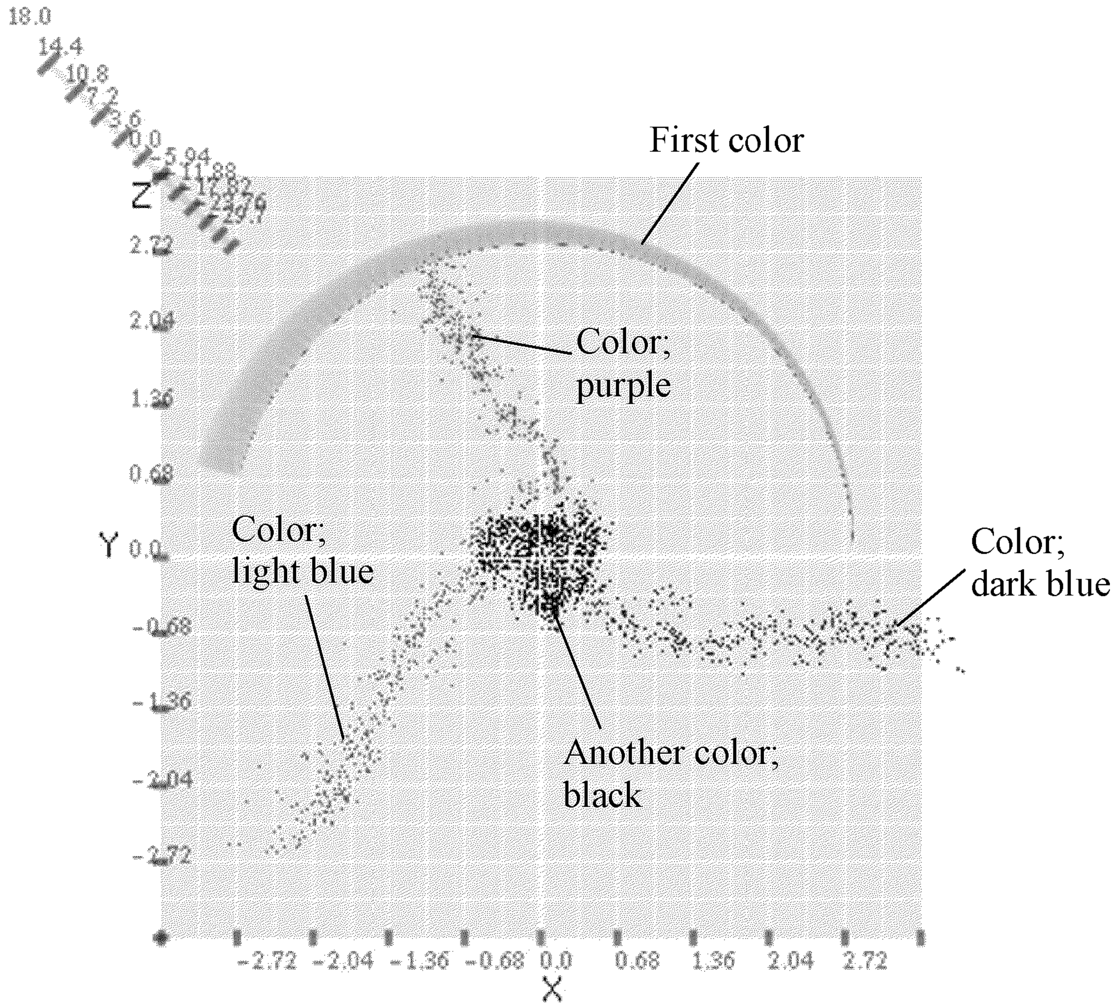
First color
Color;
purple
Color;
light blue
Color;
dark blue
Another color;
black
Z
Y
X
18.0
14.4
10.8
7.2
3.6
0.0
-5.94
-11.88
-17.82
-23.76
2.72
2.04
1.36
0.68
0.0
-0.68
-1.36
-2.04
-2.72
-2.72
-2.04
-1.36
-0.68
0.0
0.68
1.36
2.04
2.72

FIG. 10

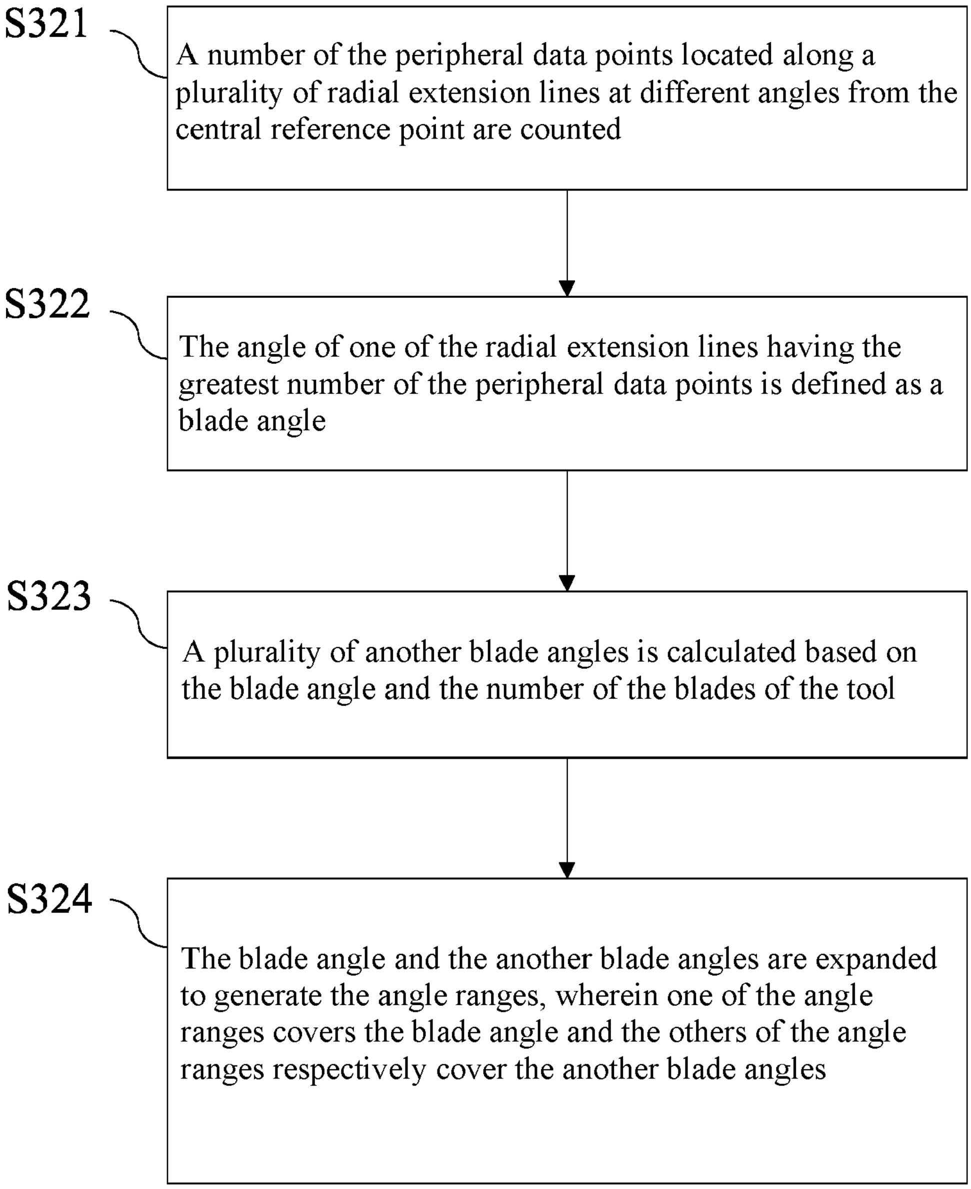
S321
A number of the peripheral data points located along a plurality of radial extension lines at different angles from the central reference point are counted
S322
The angle of one of the radial extension lines having the greatest number of the peripheral data points is defined as a blade angle
S323
A plurality of another blade angles is calculated based on the blade angle and the number of the blades of the tool
S324
The blade angle and the another blade angles are expanded to generate the angle ranges, wherein one of the angle ranges covers the blade angle and the others of the angle ranges respectively cover the another blade angles

FIG. 11

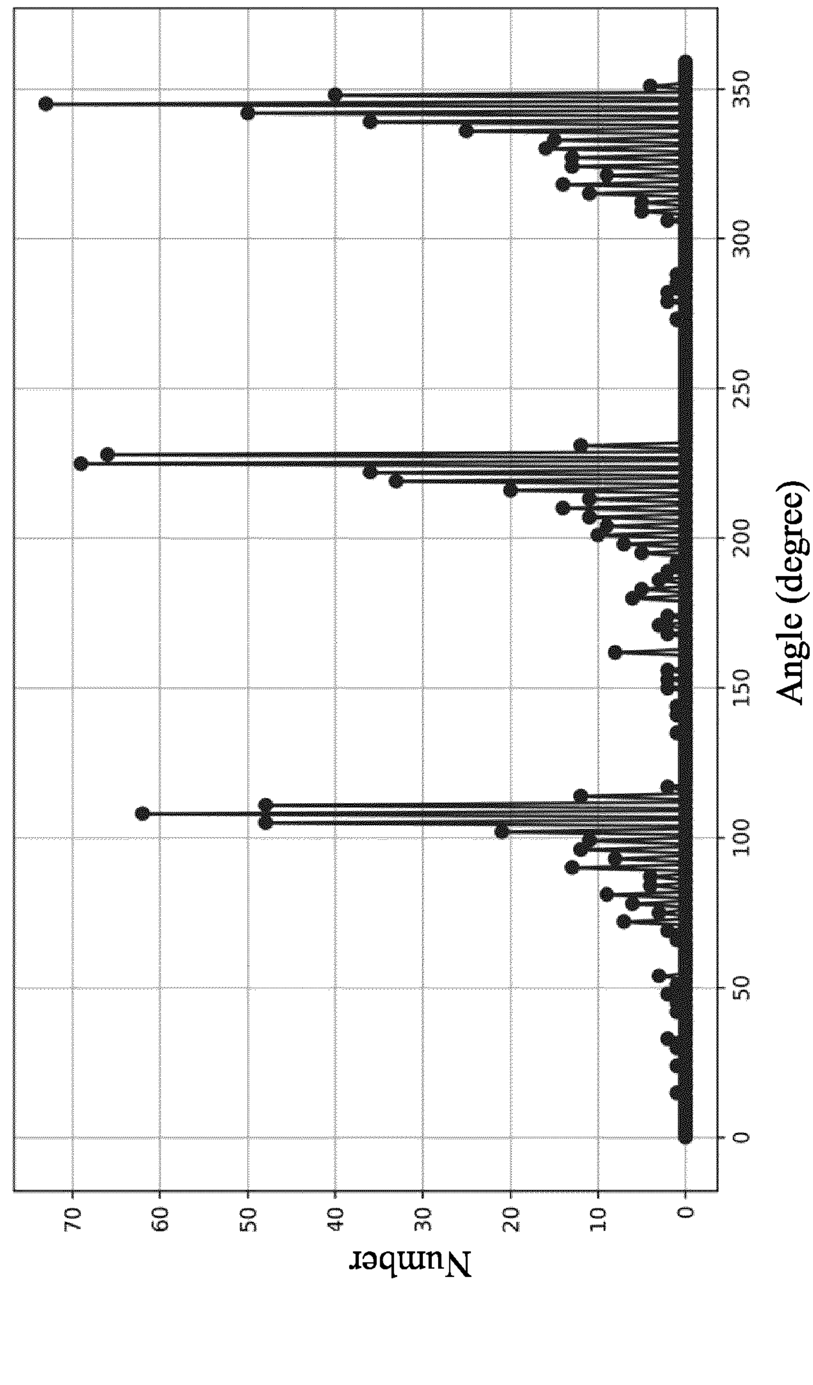
Number
70
60
50
40
30
20
10
0
0
50
100
150
200
250
300
350
Angle (degree)

FIG. 12

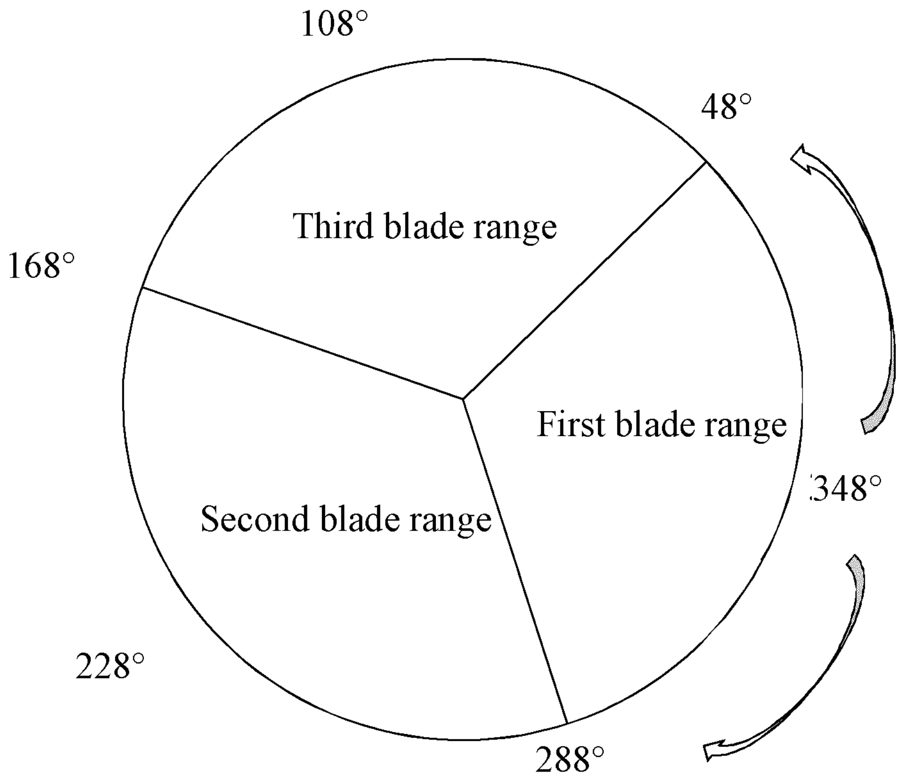
108°
48°
Third blade range
168°
First blade range
348°
Second blade range
228°
288°

FIG. 13

Europäisches Patentamt
European Patent Office
Office européen des brevets

# EUROPEAN SEARCH REPORT

Application Number
EP 25 18 1505

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2023/161320 A1 (KOIKE YUSUKE [JP] ET AL) 25 May 2023 (2023-05-25)<br>* abstract; claims 1,13,21; figures 1,2,6-17 *<br>* paragraphs [0001], [0014], [0096], [0101], [0103], [0112] - [0120], [0126], [0128] - [0147] *<br>* paragraphs [0161] - [0163], [0246] *<br>----- | 1-11<br>12-20 | INV.<br>G01L1/22<br>B23Q17/00<br>B23Q17/09<br>G01L5/00<br>G01L5/1627<br>G01L1/04<br>G01L5/16 |
| X<br>A | JP 7 384321 B1 (TOYOSHIMA AKIHIRO [JP];KOIKE YUSUKE [JP]) 21 November 2023 (2023-11-21)<br>* abstract; claim 1; figures 1,2,12 *<br>* paragraphs [0026] - [0029], [0035] - [0037] *<br>* paragraph [0054] *<br>----- | 1-11<br>12-20 | |
| X<br>A | EP 3 486 737 A1 (PRO MICRON GMBH [DE]; HOCHSCHULE BREMEN [DE]) 22 May 2019 (2019-05-22)<br>* claim 1; figures 1,2,6,7 *<br>* paragraphs [0018], [0027] - [0029] *<br>----- | 1<br>2-20 | TECHNICAL FIELDS SEARCHED (IPC) |
| A | CN 116 061 006 A (CHENGDU AIRCRAFT IND GROUP CO LTD) 5 May 2023 (2023-05-05)<br>* abstract; claims 1,7; figures 3,4 *<br>* paragraphs [0036] - [0039] *<br>----- | 1-20 | G01L<br>B23Q |

The present search report has been drawn up for all claims

2

| Place of search | Date of completion of the search | Examiner |
|---|---|---|
| The Hague | 26 November 2025 | Nelva-Pasqual, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 18 1505

This annex lists the patent family members relating to the patent documents cited in the above-mentioned European search report. The members are as contained in the European Patent Office EDP file on
The European Patent Office is in no way liable for these particulars which are merely given for the purpose of information.

26-11-2025

| Patent document cited in search report | Publication date | Patent family member(s) | Publication date |
|---|---|---|---|
| US 2023161320 A1 | 25-05-2023 | CN 115297983 A | 04-11-2022 |
| | | CN 115315337 A | 08-11-2022 |
| | | EP 4137257 A1 | 22-02-2023 |
| | | EP 4137258 A1 | 22-02-2023 |
| | | JP 6973689 B1 | 01-12-2021 |
| | | JP 7060174 B2 | 26-04-2022 |
| | | JP 7435576 B2 | 21-02-2024 |
| | | JP 2022020722 A | 01-02-2022 |
| | | JP WO2021210037 A1 | 21-10-2021 |
| | | JP WO2021210207 A1 | 21-10-2021 |
| | | US 2023161320 A1 | 25-05-2023 |
| | | US 2023166376 A1 | 01-06-2023 |
| | | WO 2021210037 A1 | 21-10-2021 |
| | | WO 2021210207 A1 | 21-10-2021 |
| JP 7384321 B1 | 21-11-2023 | CN 120091888 A | 03-06-2025 |
| | | EP 4616995 A1 | 17-09-2025 |
| | | JP 7384321 B1 | 21-11-2023 |
| | | JP 7632773 B2 | 19-02-2025 |
| | | JP WO2024100693 A1 | 16-05-2024 |
| | | JP WO2024101313 A1 | 16-05-2024 |
| | | WO 2024100693 A1 | 16-05-2024 |
| | | WO 2024101313 A1 | 16-05-2024 |
| EP 3486737 A1 | 22-05-2019 | EP 3486737 A1 | 22-05-2019 |
| | | WO 2019101617 A1 | 31-05-2019 |
| CN 116061006 A | 05-05-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 8113066 B2